Europäisches Patentamt

European Patent Office

Office européen des brevets

(19)

(11) Numéro de publication : **0 347 513 B1**

(12) **FASCICULE DE BREVET EUROPEEN**

(45) Date de publication du fascicule du brevet :
**19.08.92 Bulletin 92/34**

(51) Int. Cl.$^5$ : **B23Q 3/12, B23Q 3/155**

(21) Numéro de dépôt : **88830548.9**

(22) Date de dépôt : **21.12.88**

(54) **Dispositif pour le positionnement et le blocage sur le nez de broche du madrin d'une machine-outil de mécanismes pour différents usinages mécaniques.**

(30) Priorité : **21.06.88 IT 943088**

(43) Date de publication de la demande :
**27.12.89 Bulletin 89/52**

(45) Mention de la délivrance du brevet :
**19.08.92 Bulletin 92/34**

(84) Etats contractants désignés :
**CH DE ES FR GB LI SE**

(56) Documents cités :
**DD-A- 143 054
DE-A- 3 515 520
US-A- 3 930 301
US-A- 4 709 465**

(56) Documents cités :
**PATENT ABSTRACTS OF JAPAN vol.12, no. 83
(M-677)(2930), 16 mars 1988; & JP - A - 62 224
541 (NIIGATA ENG CO: LTD.)
PATENT ABSTRACTS OF JAPAN vol. 11, no.
235 (M-612)(2682), 31 juillet 1987; & JP -A - 62
48 437 (DAISHOWA SEIKI K.K.)**

(73) Titulaire : **BAKUER ITALIANA S.p.A.
Via del Farneto San Martino alla Palma
I-50010 Scandicci Firenze (IT)**

(72) Inventeur : **Cioci, Mauro
Via del Farneto I-50010 S. Martino Alla Palma
Scandicci Firenze (IT)**

(74) Mandataire : **Martini, Lazzaro
Ufficio Brevetti Ing. Lazzaro Martini Via dei
Rustici 5
I-50122 Firenze (IT)**

## Description

La présente invention concerne un dispositif selon le préambule de la revendication 1.

Ces dispositifs voir p.ex. le document JP-A-62-224 541, sont conçus pour le positionnement et le blocage de mécanismes destinés à différents usinages avec enlèvement de copeaux et pourvus d'un goujon fixe avec distance d'entre-axes prédéterminée, tels que des têtes à angle pour le fraisage, des multiplicateurs de tours, des têtes à broches multiples, des conteneurs d'alimentation d'huile (oil feed holders), des nettoyeurs de cônes, lesquels sont portés par l'intermédiaire de moyens de déplacement de porte-outils sur le nez de broche du mandrin d'une machine-outil, machine à commande numérique, centre d'usinage et autre.

Il est connu que de nombreux centres d'usinage, machines-outils à commande numérique, ou machines-outils traditionnelles, sont pourvues de moyens de déplacement des porte-outils, adaptés pour prélever en séquence d'un magasin, les divers mécanismes avec un outil d'usinage différent, l'amener dans une position déterminée et constante sur le nez de broche du mandrin de la machine et l'emmancher dans le trou central de celui-ci. Tous ces dispositifs comportent nécessairement une carcasse extérieure fixe, soit parce que cette carcasse représente un élément du cinématisme interne, comme par exemple dans les multiplicateurs de tours, soit parce qu'elle constitue le conteneur de pièces rotatives, comme par exemple dans le conteneur d'alimentation d'huile (oil feed holder); il est donc nécessaire de prévoir sur le nez de broche, différents mécanismes et de bloquer leur carcasse externe par rapport à la rotation du mandrin.

Jusqu'à aujourd'hui, ces fonctions étaient remplies par un siège ou logement prévu sur le nez de broche ou sur un bloc fixé sur ledit nez, dont la distance par rapport à l'axe du mandrin est égale à la distance d'entre-axes du mécanisme à bloquer et donc apte à recevoir et bloquer le goujon correspondant. Ce système contraint à n'installer sur la machine qu'un seul type de mécanisme, ou alors requiert le remplacement dudit bloc en même temps que le type de mécanisme, étant donné, de plus, que celui-ci peut exiger une alimentation différente (par exemple en huile ou en air comprimé). Ceci empêche une automatisation complète des processus d'usinage avec enlèvement de copeaux et, de ce fait, s'oppose aux avantages apportés par l'utilisation du bras mécanique précité.

– Le document JP-A-62-224.541 décrit un bloc de raccordement pour un seul type d'outil, c'est-à-dire avec un seul orifice pour un seul fluide opérateur.

– Le document DD-A-143.054 décrit un bloc de raccordement pour un seul type de porte-outil, c'est-à-dire du type à alésage d'angle.

– Le document J-A-143.054 décrit un bloc de raccordement avec un siège tronconique pour la prise de la queue d'un autre mécanisme.

– Le document US-A-3.930.301 décrit une machine-outil adaptée pour recevoir, sélectivement, un porte-outil.

Aucun desdits dispositifs connus n'est adapté pour monter, un par un, tous les outils ou mécanismes d'utilisation courante pour les différents usinages pouvant etre exécutés avec les machines-outils avec mandrin à enlèvement de copeaux. Par conséquent, aucun desdits dispositifs connus ne permet de monter et changer d'outil automatiquement, par exemple au moyen d'un robot et sans changer le bloc de raccordement.

La présente invention a pour but d'éliminer les inconvénients précités en réalisant un dispositif qui permette le positionnement et le blocage de plusieurs mécanismes différents possédant une distance d'entre-axes prédéterminée, tout en permettant leur alimentation en fluide, tel que l'huile, l'air comprimé ou autre.

Ce résultat a été atteint conformément à l'invention en réalisant un dispositif selon la revendication 1.

La solution proposée par la présente invention permet la réalisation d'un dispositif pour le positionnement et le blocage univoques de plusieurs mécanismes pourvus d'une carcasse externe fixe et possédant une distance d'entre-axes standard, et qui est, de plus, applicable à n'importe quel type de machine-outil pour enlèvement de copeaux ou de centre d'usinage analogue.

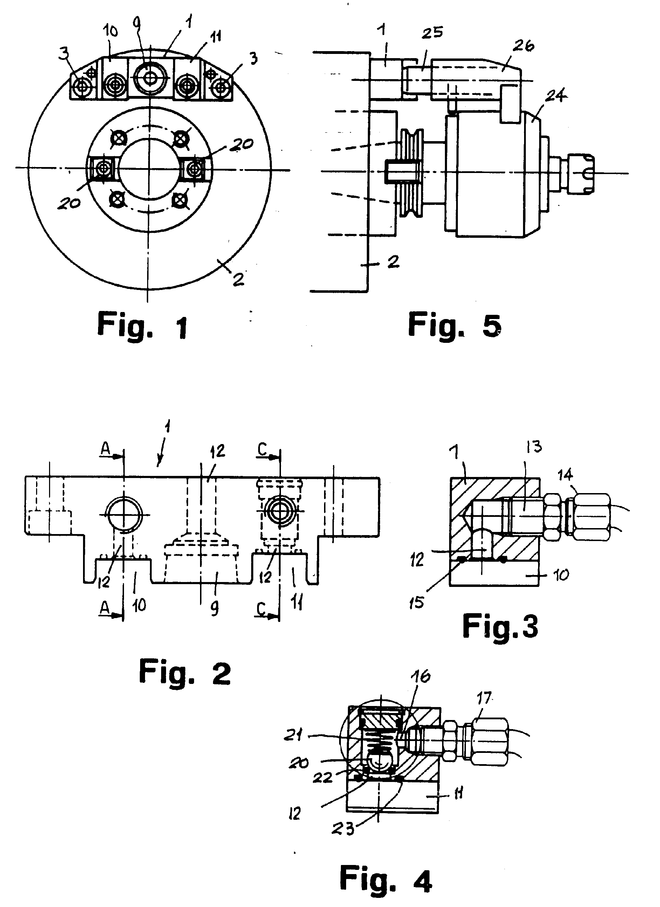

Ces avantages et caractéristiques ainsi que d'autres seront plus et mieux compris de chaque homme du métier à la lumière de la description qui va suivre et à l'aide des dessins annexés donnés à titre d'exemplification pratique de l'invention, mais à ne pas considérer dans le sens limitatif; dessins sur lesquels: la FIG. 1 représente une vue de face d'un nez de broche de machine-outil, pourvu d'un dispositif de positionnement et de blocage de trois mécanismes pour usinages avec enlèvement de copeaux, conformément à l'invention; la FIG. 2 représente la vue de dessus agrandie du dispositif de la Fig. 1; la FIG. 3 représente la vue en coupe suivant la ligne A-A de la Fig. 2; la FIG. 4 représente la vue en coupe suivant la ligne C-C de la Fig. 2; la FIG. 5 représente la vue de côté de la Fig. 1, avec un multiplicateur de tours installé.

Réduit à sa structure essentielle et en référence aux Figures 1 et 2 des dessins annexés, un dispositif en conformité avec l'invention, pour le positionnement et le blocage de mécanismes, pour des usinages avec enlèvement de copeaux ou rognures, sur le nez de broche du mandrin 2 d'une machine-outil qui est pourvu de moyens 20 pour transmettre aux parties mobiles des mécanismes le mouvement de rotation du mandrin, est constitué d'un bloc 1 de forme prismatique irrégulière, fixé frontalement sur le nez de broche 2 de la machine au moyen de deux vis latérales 3, inscrit dans le périmètre dudit nez de broche et dont la face frontale est modelée en gradins avec trois sièges correspondants, un central 9 et deux latéraux 10, 11, qui sont pourvus d'un trou 12 dont les axes respectifs, qui sont parallèles à celui du mandrin, se trouvent situés sur une même circonférence concentrique au mandrin et possédant un rayon égal à la distance d'entre-axes des mécanismes, c'est-à-dire à la distance entre l'axe de rotation du mandrin et l'axe du goujon de blocage coopérant avec le siège correspondant du bloc au moment de l'emmanchement, par les moyens de déplacement, du mécanisme opérateur dans le trou du nez de broche.

Comme mieux représenté sur la Fig. 2, le siège central 9 est constitué d'une cavité tronconique pour permettre le positionnement de têtes à angle de fraisage, et les deux sièges latéraux 10, 11 sont des cavités de section rectangulaire dont le trou 12 se trouve en correspondance du goujon appartenant à d'autres types de mécanismes opérateurs.

Comme représenté sur la Fig. 3, le trou 12 du siège 10 est en communication avec un conduit 13 interne au bloc 1 lui-même, à l'extrémité duquel est raccordé le raccord fileté 14 d'un tube d'alimentation en fluide, par exemple du fluide de coupe, nécessaire pour certains types de mécanismes tels que le conteneur d'alimentation d'huile (oil feed holder); l'étanchéité à la sortie étant assurée par un joint torique 15 coopérant avec le moyen de blocage du mécanisme qui lui aussi pourvu d'un trou interne pour le passage du fluide à travers son goujon.

Comme représenté sur la Fig. 4, le trou 12 du siège 11 est en communication avec un conduit 16 interne au bloc 1 lui-même et à l'extrémité duquel est raccordé le raccord fileté 17 d'un tube d'alimentation avec un autre fluide, par exemple de l'air comprimé, nécessaire pour certain types de mécanismes tels que le nettoyeur de cônes et autres.

Le conduit 16 est avantageusement pourvu d'une soupape de fermeture réalisée au moyen d'une bille 20 qui est poussée par un ressort 21 contre un joint torique interne 22, pour obturer automatiquement l'embouchure du trou 12; ladite bille est soulevée en surmontant la force du ressort 21 sous l'action du goujon du mécanisme correspondant introduit dans le trou 12 pour permettre d'ouvrir le circuit d'alimentation en air comprimé; dans ce cas également, l'étanchéité à la sortie est assurée par un joint torique 23 qui coopère avec le moyen de blocage du mécanisme qui lui aussi pourvu d'un conduit interne de passage du fluide à travers son goujon.

Comme représenté sur la Fig. 5 des dessins annexés, un dispositif générique 24, par exemple un multiplicateur de tours, a été prélevé du magasin des outils au moyen d'un bras mécanique (non représenté par simplification), toujours dans une même position prédéterminée par rapport au siège correspondant de réception et de blocage du bloc 1, qui dans ce cas est le siège 10, de manière à ce que, lorsque le mécanisme est emmanché dans le trou du mandrin, le goujon 25 du moyen de blocage 26 de la carcasse externe se trouve automatiquement installé en correspondance du trou 12 du siège 10.

Avec un dispositif en conformité avec l'invention, est rendue possible une automatisation complète d'une quelconque machine-outil, du fait qu'un quelconque mécanisme opérateur peut être positionné et bloqué toujours dans la même position par rapport au nez de broche du mandrin, et sans avoir à effectuer aucune modification sur la machine; ceci permet, en outre, d'optimiser les temps d'usinage et donc les coûts de production.

## Revendications

1. Bloc de raccordement automatique au mandrin d'une machine-outil à enlèvement de copeaux d'un porte-outil générique (24), du type pourvu d'un goujon fixe (25) à une distance d'entre-axes prédéterminée, avec des moyens correspondants de prise dudit goujon (25) caractérisé en ce qu'il est constitué par un corps (1) dont la face avant est munie d'un premier siège (9) pour la prise de la queue d'une tête-fraise d'angle, d'un deuxième siège (10) pour la prise de la queue d'un deuxième mécanisme opérateur et d'un troisième siège (11) pour la prise d'un troisième mécanisme opérateur, lesdits deuxième et troisième mécanisme opérant avec des fluides différents et lesdits deuxième et troisième sièges (10,11) étant communicants par l'intermédiaire de conduits (12,13) et (12,16) respectivement, avec les moyens d'alimentations des fluides opérateurs correspondants, et, en outre, lesdits sièges (9-11) ayant un point central de prise situé sur une même circonférence concentrique à l'axe du mandrin lorsque ledit bloc est monté sur le mandrin.

## Claims

1. Automatic connection block of chuck of a machine tool for removing metal chips of a generic tool holder (24) of the type provided with a fixed bolt (25) with a predetermined distance between axes, with corresponding means of holding the said bolt (25), characterized by the fact that it consists of a body (1), on the front of which a first seat (9) is provided for holding the tail end of an angle milling head, with a second seat (10) for holding the tail end of a second operating mechanism and a third seat (11) for holding a third operating mechanism, where the said second and third mechanism operate with different fluids and the said second end third seats (10,11) communicating via ducts (12,13) and (12,16) respectively with the means of feeding corresponding operating fluids and also the said seats (9-11) havint a central holding point situated on the same concentric circumference as the chuck axis when the said block is mounted on the chuck.

**Patentansprüche**

1. Block, der dazu dient, einen automatischen Anschluß zwischen der Spindel einer spanabhebenden Werkzeugmaschine mit einem Vorsatz-Werkzeugträger (24) herzustellen, der mit einem festen Zapfen (25) in einem vorgegebenen Mittenabstand versehen ist, mit entsprechenden Einrichtungen zum Ergreifen des Zapfens (25), dadurch gekennzeichnet, daß er von einem Körper (1) gebildet ist, dessen Vorderfläche mit einem ersten Sitz (9) zur Aufnahme des Einsteckendes eines Winkelfräskopfes, einem zweiten Sitz (10) zur Aufnahme des Einsteckendes einer zweiten Bearbeitungseinrichtung und mit einem dritten Sitz (11) zur Aufnahme einer dritten Bearbeitungseinrichtung versehen ist, wobei die zweite und dritte Einrichtung mit verschiedenen Fluiden arbeiten und der zweite und der dritte Sitz (10,11) mit Hilfe von Leitungen (12,13 bzw. 12,16) mit Zuführvorrichtungen für die entsprechenden Arbeitsfluide in Verbindung stehen, und wobei im übrigen diese Sitze (9 bis 11) einen zentralen Aufnahmepunkt besitzen, der sich auf ein und demselben Umkreis befindet, der zur Spindelachse konzentrisch ist, wenn dieser Block am Spindelkopf montiert ist.

**Fig. 1**

**Fig. 5**

**Fig. 2**

**Fig.3**

**Fig. 4**